# EUROPEAN PATENT SPECIFICATION

(11) **EP 0 703 676 B1**
(45) Date of publication and mention of the grant of the patent: **13.12.2000**
(21) Application number: 95114672.9
(22) Date of filing: 18.09.1995
(51) Int. Cl.: H04B 1/38, G06K 19/07, G07C 9/00, G07F 7/10

(54) **Portable communication device and IC card therefor**
Tragbares Kommunikationsgerät und eine IC-Karte dafür
Dispositif de communication portatif et carte à puce associée

(30) Priority: 22.09.1994 JP 22766694
(43) Date of publication of application: 27.03.1996
(73) Proprietor: KABUSHIKI KAISHA TOKAI RIKA DENKI SEISAKUSHO, Niwa-gun, Aichi (JP)
(72) Inventor: Kokubu, Sadao, c/o KK. Tokai Rika Denki Seisakusho, Niwa-gun, Aichi (JP)
(74) Representative: Grünecker, Kinkeldey, Stockmair & Schwanhäusser Anwaltssozietät

(56) References cited:
- EP-A- 0 159 539
- US-A- 4 277 837
- PATENT ABSTRACTS OF JAPAN vol. 018 no. 099 (E-1510) ,17 February 1994 & JP-A-05 300144 (TOSHIBA CORP) 12 November 1993,
- PATENT ABSTRACTS OF JAPAN vol. 014 no. 551 (P-1139) ,7 December 1990 & JP-A-02 235166 (MITSUBISHI ELECTRIC CORP) 18 September 1990,

## Description

The present invention relates to a signal transmission system.

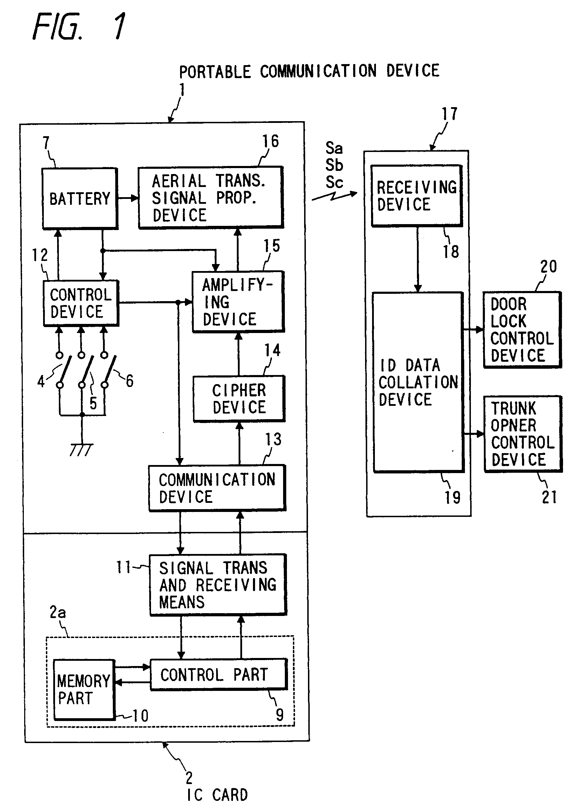

EP -A- 0 159 539 suggests in connection with Figure 1 an input/output device (2) capable of receiving therein a chip card (1). The input/output device comprises operation means (Bedienungselemente), transmission and receiving means (Sende-/Empfangs-Dioden) as well as a battery (see page 4, line 28). Input/output device (2) is preferably made of plastic and, as shown in Figure 1, has an envelope-like form. The proposed system further comprises a fixed site transmission and receiving means (3) for communication with the input/output unit (2). According to page 5, line 24 to page 6, line 7, processor (12) of IC card (1) may perform a data encryption function.

US -A- 4,277,837 suggests a personal portable terminal for financial transactions adapted for use with one or more data storage and transfer cards and other external devices, such as point of sale terminals. The transaction device includes keyboard means for entering transaction data and control information, means for temporarily storing transaction data and logic means for performing arithmetic, logical and control operations. Said logic means further includes means for storing predetermined programs, which are activated by instructions entered via the keyboard. Also included are display means for selectively displaying transaction data and means for transferring selected data from the transaction device into suitable storage means located in the other external device and into at least one data storage and transfer card.

In recent years, a card information system which uses an IC card to display information on a monitor screen such as a telephone number list, an address book, an expressway toll list, and the like has been proposed as an auto accessory. In the conventional device, the IC card employs a transmitter that uses ID data stored in the IC card to transmit the driver's particular aerial propagation signal. The IC card can thereby be used as a portable communication device, for example, in a keyless entry system. The portable communication device of this type can be very valuable and simple to use and has great promise.

In recent years, it has been found that a driver's license can be made in the form of an IC card. However, it is not possible to provide an operation switch or the like in the IC card driver's license and, therefore, the IC card driver's license cannot be used as a portable communication device. Thus, for an IC card driver's license to be used as part of a keyless entry system of a car, it is necessary to provide an IC card reader on the car. However, it is difficult to provide the IC card reader on the outside of the car. Also, even if the IC card reader can be provided in this manner, the system configuration is complicated, and the IC card reader can become damaged by water, dust and the like, thereby reducing its reliability. For these reasons, problems can arise when the IC card driver's license is applied to other uses.

In view of the above, it is the object of the present invention to provide a signal transmission system which may be used for easy and secure transmission of data stored on IC cards.

This object is solved by the subject matter of claim 1.

Preferred embodiments are the subject matter of the dependent claims thereto.

### BRIEF DESCRIPTION OF THE DRAWINGS

Fig. 1 is a block diagram of the electric structure of a first embodiment of a portable communication device according to the invention;
Fig. 2 is a perspective view of the above portable communication device together with an IC card;
Fig. 3 is a perspective view of a second embodiment of a portable communication device together with an IC card according to the invention;
Fig. 4 is a block diagram of a third embodiment of a portable communication device according to the invention; and
Fig. 5 is a perspective view of the portable communication device shown in Fig. 4.

### DETAILED DESCRIPTION OF THE PREFERRED EMBODIMENTS

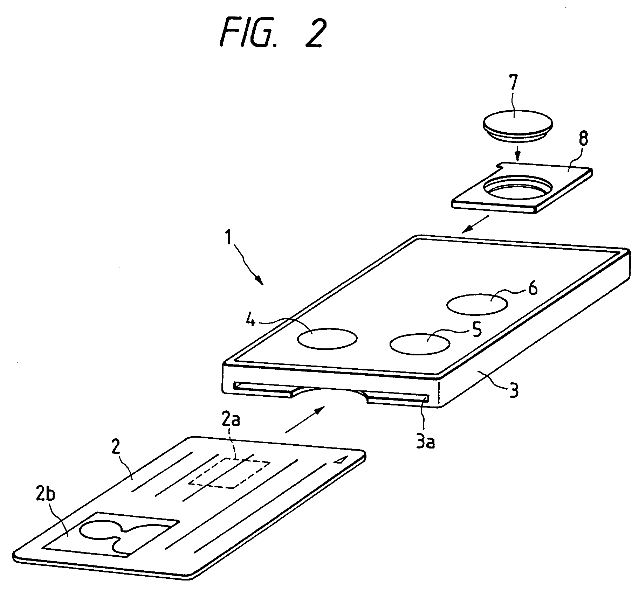

Fig. 2 shows a portable communication device 1 and an IC card 2. The IC card 2 is, for example, an ID card or a driver's license. An IC chip 2a is embedded in the IC card 2, and includes a CPU, an EEPROM and the like. The surface of the IC card 2 has a photograph 2b of the IC card owner and necessary characters (not shown) by printing or by embossing. Also, the IC card 2 contains signal transmitting and receiving means (which is designated by 11 in Fig. 1) that are used not only to transmit and receive a signal to and from external equipment but also to receive electric power. The signal transmitting and receiving means can be an ordinary contact device or a non-contact device using inductive coupling, photo coupling, capacitive coupling, or the like.

The portable communication device 1 includes a main body case 3 structured as a holder that is mounted with the IC card 2 stored therein. The main body case 3 is a thin rectangular container that includes on an end face thereof a slit 3a for insertion of the IC card 2. On the top surface of the main body case 3, there is provided a lock switch 4, an unlock switch 5, and a trunk opener switch 6. Due to use of membrane switches, the switches 4 to 6 can be thin. Also, a button type battery 7 is mounted into the main body case 3 through a cartridge 8.

Fig. 1 shows a functional block diagram of the electric structures of the portable communication device 1 and IC card 2 as well as the electric structure of a signal transmission system using the portable communication device 1 and IC card 2.

The IC card 2, when it is expressed by means of functional blocks, includes a control part 9, a memory part 10 comprising the EEPROM provided in the IC card 2a, and the above-mentioned signal transmission means 11. The memory part 10 is structured such that the ID data particular to the owner of the IC card 2 are stored in the given memory areas of the memory part 10 in an unrewritable manner, so that arbitrary data can be written into the other memory areas.

In addition to the lock switch 4, unlock switch 5, trunk opener switch 6, and battery 7, the main body case 3 of the portable communication device 1 also includes a control device or transmission control means 12, a communication means 13, a cipher device 14, an amplifying device 15, and an aerial propagation signal generation device 16.

The control device 12 includes a microcomputer and controls the output of battery 7 to the communication device 13, cipher device 14, amplifying device 15 and aerial transmission signal propagation device 16. Control device 12 also directs operations to be described later according to the operations of the respective switches 4, 5, and 6. The communication device 13 in the IC card 2 mounted state supplies power to the IC card 2 and is accessible to the control part 9 through the signal transmitting and receiving means 11.

When the ID data stored in the memory part 10 on the ID card 2 are read out through the communication device 13, the cipher device 14 scrambles and ciphers the read-out data. The cipher device 14 can be implemented by the program of the microcomputer forming the control device.

The amplifying device 15 combines the ciphered signal containing the ID data from the cipher device 14 with an operation signal from the control device 12. The amplifying device 15 then amplifies this combination signal and applies it to the aerial propagation signal generation device 16. The aerial propagation signal generation device 16 modulates the signal given by the amplifying device 15 and transmits the modulated signal in the form of an aerial propagation signal, such as an electric wave signal, photo signal, or supersonic wave signal. In the present embodiment, where the electric wave signal is used, an antenna for transmission is contained in the aerial propagation signal generation device 16.

When the lock switch 4, unlock switch 5, and trunk opener switch 6 are turned on, the control device 12 generates a request signal to ask the control part 9 of the IC card 2 to respond with the ID data stored in the memory part 10. The request signal is transmitted to the IC card 2 through the communication device 13. The control device 12 then applies a lock operation signal to the amplifying device 15. The amplifying device 15 amplifies and outputs a combination signal consisting of the lock operation signal and the ciphered signal containing the ID data. In response to this, the aerial propagation signal generation device 16 transmits a lock signal Sa containing the ciphered ID data in the form of an electric wave signal.

In addition, when the unlock switch 5, or trunk opener switch 6 is operated, the control device 12 applies an unlock operation signal or a trunk opener operation signal to the amplifying device 15. The aerial propagation signal generation device 16 then transmits an unlock signal Sb containing the ciphered ID data, or a trunk opener signal Sb containing the ciphered ID data, in the form of an electric wave signal.

A receiving unit 17 for a keyless entry system, which can be loaded on a car, includes a receiving device 18 and an ID data collation device 19 serving as load control means. When the receiving device 18 receives the electric wave signal such as the lock signal Sa, unlock signal Sb, or trunk opener signal Sc or other electric wave signal in the same frequency band transmitted from the portable communication device, it demodulates the signal received and applies the demodulated signal to the ID data collation device 19.

The ID data collation device 19 deciphers the ID data contained in the electric wave signal received from the receiving device 18 and compares it with the previously stored (registered) data. If they are found to be identical to each other, the ID data collation device 19 determines that the receiving device 18 has received the signal (any one of the lock signal Sa, unlock signal Sb, and trunk opener signal Sc) combined with the ID data, and generates a load control signal corresponding to the received signal.

When the ID data collation device 19 determines that the lock signal Sa has been received, it (1) outputs a load control signal to a door lock control device 20, which has lock and unlock control on a car door lock mechanism (not shown) to instruct the device 20 to perform a lock operation, (2) outputs a load control signal to the door lock control device 20 to instruct the same to perform an unlock operation when it judges that the unlock signal Sb has been received, and (3) outputs a load control signal to a trunk opener control device 21, which has unlock control on a car trunk lid lock mechanism (not shown), to instruct the truck opener to perform an unlock operation (a trunk opening operation) when it judges that the trunk opener signal Sc has been received.

In short, where the IC card 2 is stored in the main body case 3 of the portable communication device 1, and either the lock switch 4, unlock switch 5 or trunk opener switch 6 provided on the surface of the main body case 3 is operated, then an electric wave signal containing the ciphered data of the ID data stored in the IC card 2 (one of the lock signal Sa, unlock signal Sb and trunk opener signal Sc) is transmitted. Therefore, even if no processing is performed on the IC card 2, an electric wave signal can be transmitted to a particular owner of the IC card 2 by use of the ID data stored in the IC card 2. This can expand the uses of the IC card 2 and thus can enhance the additional value of the IC card 2 considerably.

Also, it is possible to build a signal transmission system (a keyless entry system) which controls the operations of a car door lock mechanism and a car trunk lid lock mechanism in accordance with the electric wave signal to be transmitted in the above-mentioned manner and, in this respect as well, the additional value of the IC card 2 can be enhanced. Moreover, because the receiving unit 1 forms one of the main portions of the keyless entry system, it is possible to simply use a unit which has been conventionally loaded on a car. This eliminates the danger that the system can be less reliable and more complicated in structure, which could occur in a case where an IC card reader is installed on the outside of the car.

Of course, in this case, since it is not necessary to significantly increase the size of the main body case 3, there is no concern that the portability of the main body case 3 will worsen and, in this sense, the additional value of the IC card 2 is enhanced. Also, since the main body case 3 is structured as a holder which stores the IC card 2 in the inside thereof, the IC card 2 can be protected.

Also, since the battery 7 for supplying power to the IC card 2 is disposed on the main body case 3, it is not necessary to incorporate a battery on the IC card 2 and the capacity of the battery 7 can be increased up to a relatively large level. This not only makes it possible to increase the level of the output of the electric wave signal to be transmitted by the control device 12 through the aerial electric wave signal generation device 16, but also can extend the life of the battery 7.

The load to be controlled is not limited to the car door lock mechanism and car trunk lid lock mechanism, but it may include other loads for a car such as a starter device for a car engine, and other kinds of loads which are not connected with a car, such as a door lock mechanism, an entrance and exit device, a terminal operation device, and the like for a house or a factory or a laboratory.

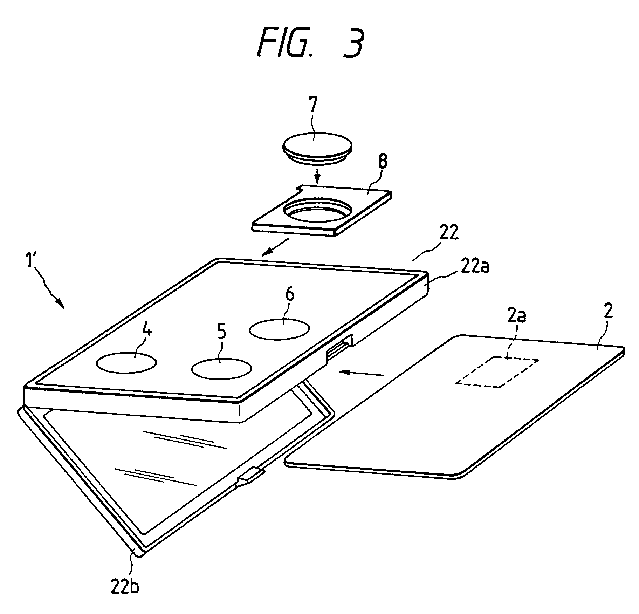

Fig. 3 shows a second embodiment of the invention in which the structure of the main body case 3 is modified. Only the portions of the second embodiment that are different from the first embodiment will be described.

In Fig. 3, a portable communication device 1' according to the second embodiment of the invention includes a main body case 22 structured as a holder which can store an IC card 2. The main body case 22 includes a card storage portion 22a formed in a rectangular container that is opened from the lower surface and is shallow in depth and a transparent cover portion 22b which is mounted to the card storage portion 22a in such a manner that it is able to open or close the lower surface opening portion of the card storage portion 22a. A lock switch 4, an unlock switch 5, a trunk opener switch 6, a battery 7, a cartridge 8, and functional parts necessary for the structure shown in Fig. 1 are all provided on the card storage portion 22a. In this case, the IC card 2 is stored in the card storage portion 22a of the main body case 22, while the surface of the IC card 2 with the photograph 2b (see Fig. 2) stuck thereon is placed on the transparent cover portion 22b. Since the transparent cover portion 22b is provided in the main body case 22, it is possible to see the photograph and characters provided on the surface of the IC card 2 while the IC card 2 is being stored in the main body case 22, thereby improving the convenience of the IC card 2.

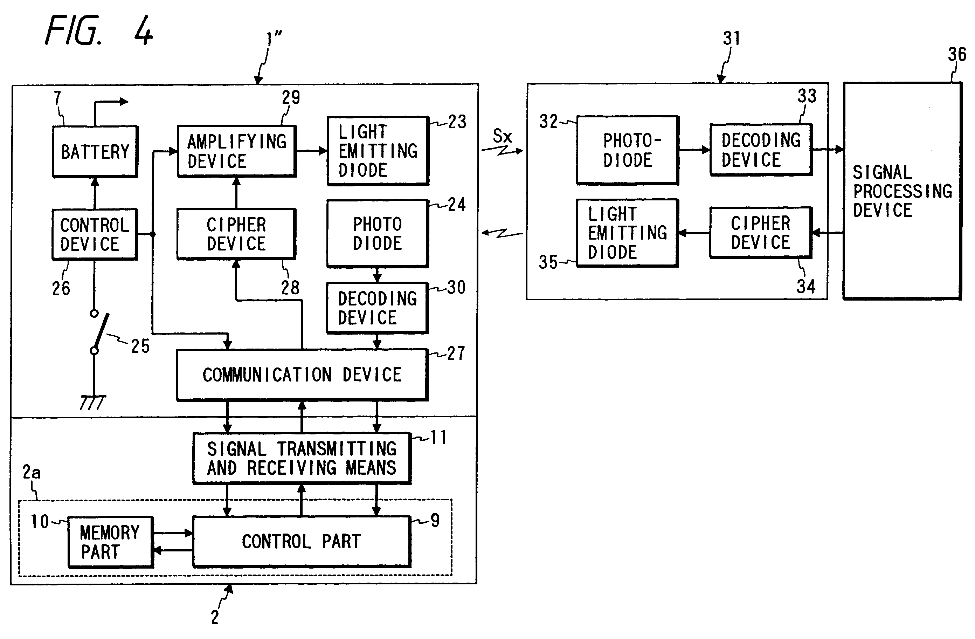

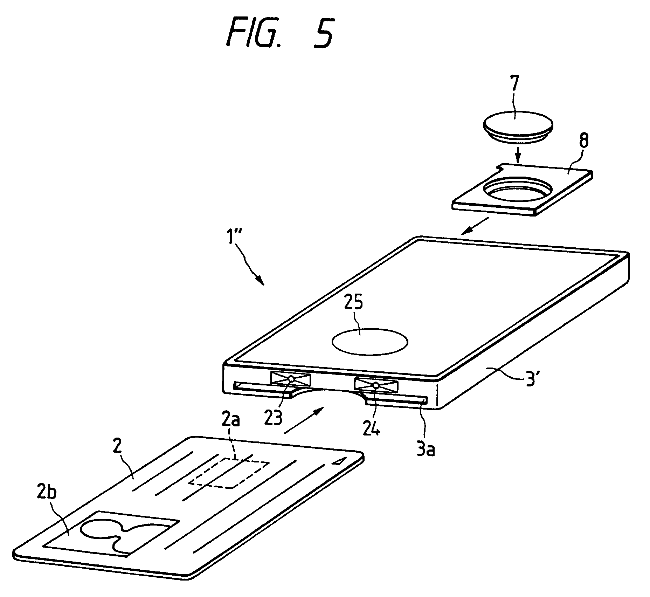

Figs. 4 and 5 show a third embodiment in which the invention is applied to an automatic financial accounting system operated by remote control. Only the portions of the third embodiment that are different from the previously described first embodiment will be discussed.

Fig. 5 shows a portable communication device 1'' and an IC card 2 to be put into the device 1''. In Fig. 5, the portable communication device 1'' has a signal transmitting and receiving function and uses an infrared light as an aerial transmission signal for transmitting and receiving. A main body case 3' which is formed as a thin rectangular container, contains a light emitting diode 23 for transmitting an infrared light and a photodiode 24 for receiving the infrared light. Each is located adjacent to a slit 3a for insertion of the IC card 2. The upper surface of the main body case 3' includes an operation switch 25 formed from a membrane switch.

Fig. 4 shows a functional block diagram of the electric structures of the above-mentioned portable communication device 1'' and IC card 2 as well as the electric structure of a signal transmission system using the portable communication device 1'' and IC card 2. As shown in Fig. 4, in the main body case 3' of the portable communication device 1, there is only a battery 7, a light emitting diode 23, a photodiode 24, and an operation switch 25. In addition, there is also a control device also referred to as a transmission control means 26, a cipher device 28, an amplifying device 29, and a receiving means or decoding device 30.

The control device 26 is composed mainly of a microcomputer. It controls the output level of the battery 7 to the communication device 27, cipher device 28, amplifying device 29, and decoding device 30. It also carries out the following control operations in accordance with the operation of the operation switch 25. Specifically, while the IC card 2 is stored in the main body case 3', the communication device 27, not only supplies power to the IC card 2 but also has access through signal transmitting and receiving means 11 interposed between the control device 26 and decoding device 30 to a control part 9 provided on the IC card 2.

When the ID data stored in a memory part 10 provided on the IC card 2 are read through the communication device 27, the cipher device 28 scrambles and ciphers the ID data. The cipher device 28 can be implemented by the program of the microcomputer that forms the control device 26.

The amplifying device 29 combines a ciphered signal containing the ID data to be output from the cipher device 28 with an accounting request operation signal to be output from the control device 26. The amplifying device 29 then amplifies the combination signal and applies the amplified combination signal to the light emitting diode 23. In response to this, the light emitting diode 23 transmits the ciphered signal and an infrared light signal containing an operation signal. The decoding device 30 decodes the infrared light signal received by the photodiode 24, and applies the decoded signal through the communication device 27 to the IC card 2 to thereby write the same into the memory part 10.

When the operation switch 25 is activated, the control device 26 generates a request signal to the control part 9 of the IC card 2. The IC card 2 requests the control part 9 to answer back the ID data stored in the memory part 10 while the request signal is transmitted through the communication device 27 to the IC card 2 side. Also, the control device 26, applies the accounting request operation signal to the amplifying device 28 when the operation switch 25 is operated on. Therefore, in this case, the amplifying device 29 amplifies and outputs the combination signal composed of the accounting request operation signal and the ciphered signal containing the ID data and, in response, the light emitting diode 23 transmits an accounting request signal Sx containing the ciphered ID data in the form of an infrared light signal.

Similarly, a transmitting and receiving device 31 for a remote control automatic toll accounting system is installed in a site necessary for toll collection and adjustment, such as a parking lot or a toll gate in a toll road. The device 31 includes a photodiode 32, a decoding device 33, a cipher device 34 and a light emitting diode 35. In this structure, when the decoding device 33 receives the infrared light signal (the accounting request signal Sx) or other infrared light signal transmitted from the portable communication device 1'', it demodulates the received signal and applies the demodulated signal to a signal processing device or response means 36.

The signal processing device 36 deciphers the ID data contained in the signal that has been demodulated by the decoding device 33 and collates the deciphered ID data with the previously stored (registered) ID data. When both of the ID data are found identical with each other, the signal processing device 36 determines that it has received the accounting request signal Sx (that is, it has received an accounting instruction) and generates an accounting information signal containing the ID data included in the accounting request signal Sx. It then generates toll information corresponding to this ID data, time information including the data on the year, month, data and time of receipt of the accounting instruction, applies the accounting information signal to the cipher device 34, and stores the accounting information signal into a memory device (not shown) which is used to make up a bill for toll settlement.

The cipher device 34 scrambles and ciphers the accounting information signal from the signal processing device 36 and applies the ciphered signal to the light emitting diode 35. Responsive to this, the ciphered signal (containing the ID data, toll information and time information) is transmitted as an infrared light signal from the light emitting diode 35.

Therefore, if the operation switch 25 is operated on while the light emitting diode 23 of the portable communication device 1'' is turned toward the transmitting and receiving device 31, the accounting request signal Sx transmitted from the light emitting diode 23 by means of infrared light will be received on the transmitting and receiving device 31. Responsive to this, the accounting information signal containing the toll information is answered back from the signal processing device 36 by means of infrared light through the light emitting diode 35 and is received by the photodiode 24 on the portable communication device 1''.

Accordingly, in the portable communication device 1'', the accounting information signal is demodulated and is then applied to the IC card 2 through the communication device 27. In response to this, the accounting information signal is written into the memory part 10. Here, the settlement of the toll information contained in the account information signal will be made later on in accordance with the accounting information signal stored on the signal processing device 36.

In short, in the above-mentioned structure of the second embodiment, even if no processing is performed on the IC card 2, infrared light signal particular to the owner of the IC card 2 can be transmitted by use of the ID data stored in the IC card 2 as well as a function to write the processing data to be answered back according to the transmission of the infrared light signal into the IC card 2. An automatic toll accounting system can also be built and then operated by remote control, so that there can be provided similar effects to the first embodiment. In the second embodiment, in the toll accounting, the card owner does not need to let go of the IC card 2, which advantageously enhances the safety of the IC card 2 against theft.

In the second embodiment as well, when the ID data are previously ciphered on the IC card 2 side, the cipher device 28 can be omitted. Also, when code security is not required of the ID data, the ID data need not be ciphered but may be transmitted as they are.

As can be seen from the foregoing description, a portable communication device includes a main body case into which an IC card containing ID data particular to the owner of the IC card can be stored. The device also includes operation means controllable from outside, communication means for transmitting and receiving data to and from the stored IC card, and transmission control means, while the operation means is operated on, for transmitting the ID data read out (or the ciphered data of the read-out ID data) from the IC card through the communication means in the form of an aerial propagation signal. Due to this structure, there is no need to perform any processing on the IC card thereby expanding the uses of the card.

Also, the field of use of the IC card can be expanded and thus the additional value of the IC card can be enhanced by the described signal transmission system since it employs a load control signal for remotely controlling a load is generated by use of the portable communication device having the above-mentioned structure, and since it employs a predetermined processing operation that is executed upon receiving an aerial propagation signal transmitted from the portable communication device.

Also, the output level of an aerial propagation signal to be transmitted can be increased as well as a longer life for the battery since the device employs a structure in which, on the above-mentioned main body case side, there is provided a battery for supplying power to the IC card while the IC card is stored in the main body case. Finally, the IC card can be protected since the above-mentioned main body case is structured as a holder for storing the IC card.

## Claims

1. A signal transmission system, comprising:
an IC card storing (2) ID data particular to an owner of the IC card; and
a portable communication device having
a main body case (3) for receiving the IC card (2),
operation means (4, 5, 6) provided on a surface of the main body case;
non-contact communication means (13, 27) provided in the main body case for reading the ID data stored by the IC card without contacting the IC card;
a cipher means (14, 28) for ciphering the ID data read by the non-contact communication means; and
transmission control means (16) provided in the main body case for transmitting an aerial propagation signal in accordance with an operation of the operation means, said aerial propagation signal including said ciphered ID data.

2. A signal transmission system according to claim 1, further comprising:
receiving means (16, 24 and 30) provided in the main body case for receiving an aerial propagation signal including processing data and for storing the processing data into the IC card through the non-contact communication means (13, 27).

3. A signal transmission system according to claim 1 or 2 further comprising:
load control means (19, 20, 21) for generating a load control signal when the ID data included in the aerial transmission signal received by a receiving device (18), associated with said load control means, is identical to previously stored ID data.

4. A signal transmission system according to the previous claims, further comprising:
a battery (7) housed in the main body case for supplying power to the IC card while the IC card is received by the main body case.

5. A signal transmission system according to one of the previous claims, wherein the main body case includes an interior portion (3a) for receiving the IC card.

## Patentansprüche

1. Signalsendesystem, das umfaßt:
eine IC-Karte (2), die Identifizierungsdaten speichert, die speziell für einen Inhaber der IC-Karte gelten; und
eine tragbare Informationsübertragungsvorrichtung mit:
einem Hauptkörpergehäuse (3) zur Aufnahme der IC-Karte (2),
einer Betätigungseinrichtung (4, 5, 6), die an einer Flache des Hauptkörpergehäuses vorhanden ist;
einer kontaktlosen Übertragungseinrichtung (13, 27), die in dem Hauptkörpergehäuse vorhanden ist und die durch die IC-Karte gespeicherten Identifizierungsdaten liest, ohne mit der IC-Karte in Kontakt zu kommen;
einer Verschlüsselungseinrichtung (14, 28), die die Identifizierungsdaten verschlüsselt, die von der kontaktlosen Übertragungseinrichtung gelesen werden; und
eine Sendesteuereinrichtung (16), die in dem Hauptkörpergehäuse vorhanden ist und ein Drahtlossignal entsprechend einer Betätigung der Betätigungseinrichtung sendet, wobei das Drahtlossignal die verschlüsselten Identifizierungsdaten enthält.

2. Signalübertragungssystem nach Anspruch 1, das des weiteren umfaßt:
eine Empfangseinrichtung (16, 24 und 30), die in dem Hauptkörpergehäuse vorhanden ist und ein Drahtlossignal empfängt, das Verarbeitungsdaten enthält, und die die Verarbeitungsdaten in der IC-Karte über die kontaktlose Übertragungseinrichtung (13, 27) speichert.

3. Signalsendesystem nach Anspruch 1 oder 2, das des weiteren umfaßt:
eine Laststeuereinrichtung (19, 20, 21), die ein Laststeuersignal erzeugt, wenn die Identifizierungsdaten, die in dem Drahtlossignal enthalten sind, das von einer Empfangseinrichtung (18) empfangen wird, die mit der Laststeuereinrichtung verbunden ist, mit im voraus gespeicherten Identifizierungsdaten identisch sind.

4. Signalsendesystem nach den vorangehenden Ansprüchen, das des weiteren umfaßt:
eine Batterie (7), die in dem Hauptkörpergehäuse aufgenommen ist und der IC-Karte Spannung zuführt, wenn die IC-Karte in dem Hauptkörpergehäuse aufgenommen ist.

5. Signalsendesystem nach den vorangehenden Ansprüchen, wobei das Hauptkörpergehäuse einen Innenabschnitt (3a) enthält, der die IC-Karte aufnimmt.

## Revendications

1. Système de transmission de signaux, comprenant :
une carte à circuit intégré (2) stockant des données d'identification propres au détenteur de la carte à circuit intégré ; et
un dispositif de communications portatif possédant
un boîtier corps principal (3) destiné à recevoir la carte à circuit intégré (2),
un moyen d'actionnement (4, 5, 6) placé sur une surface du boîtier corps principal ;
un moyen de communications sans contact (13, 27) disposé dans le boîtier corps principal et servant à lire les données d'identification stockées par la carte à circuit intégré sans qu'il y ait contact avec la carte à circuit intégré ;
un moyen de chiffrage (14, 28) servant à chiffrer les données d'identification lues par le moyen de communications sans contact ; et
un moyen de commande de transmission (16) disposé dans le boîtier corps principal afin de transmettre un signal à propagation aérienne selon un actionnement du moyen d'actionnement, ledit signal à propagation aérienne comportant lesdites données d'identification chiffrées.

2. Système de transmission de signaux selon la revendication 1, comprenant en outre :
un moyen de réception (16, 24 et 30) disposé dans le boîtier corps principal afin de recevoir un signal à propagation aérienne comportant des données de traitement et de stocker les données de traitement dans la carte à circuit intégré via le moyen de communications sans contact (13, 27).

3. Système de transmission de signal selon la revendication 1 ou 2, comprenant en outre :
un moyen de commande de charge (19, 20, 21) servant à produire un signal de commande de charge lorsque les données d'identification comprises dans le signal à transmission aérienne qui est reçu par un dispositif de réception (18) associé audit moyen de commande de charge, sont identiques à des données d'identification précédemment stockées.

4. Système de transmission de signaux selon la revendication précédente, comprenant en outre :
une batterie électrique (7) logée dans le boîtier corps principal et servant à alimenter électriquement la carte à circuit intégré pendant que la carte à circuit intégré est reçue par le boîtier corps principal.

5. Système de transmission de signaux selon l'une quelconque des revendications précédentes, où le boîtier corps principal comporte une parie interne (3a) destinée à recevoir la carte à circuit intégré.
